# EUROPEAN PATENT SPECIFICATION

(11) **EP 1 170 336 B1**
(45) Date of publication and mention of the grant of the patent: **17.03.2004**
(21) Application number: 00981776.8
(22) Date of filing: 15.12.2000
(51) Int. Cl.: C08L 83/16, C09D 183/16, C09D 5/00

(54) **POLYSILAZANE COMPOSITION AND COATED MOLDED ARTICLE HAVING CURED OBJECT OBTAINED THEREFROM**
POLYSILANZAN-ZUSAMMENSETZUNG, GEGOSSENER, BESCHICHTETER GEGENSTAND UND VERNETZTER GEGENSTAND
COMPOSITION DE POLYSILAZANE ET ARTICLE MOULE REVETU COMPORTANT UN OBJET RETICULE TRAITE ELABORE A PARTIR DE CETTE COMPOSITION

(30) Priority: 16.12.1999 JP 35719099
(43) Date of publication of application: 09.01.2002
(73) Proprietor: ASAHI GLASS COMPANY LTD., Tokyo 100-8405 (JP)
(72) Inventor: HIGUCHI, Toshihiko, Asahi Glass Company, Limited, Yokohama-shi, Kanagawa 221-8755 (JP); KONDO, Satoshi, Asahi Glass Company, Limited, Yokohama-shi, Kanagawa 221-8755 (JP); SHIBUYA, Takashi, Asahi Glass Company, Limited, Yokohama-shi, Kanagawa 221-8755 (JP); SHIMODA, Hiroshi, Asahi Glass Company, Limited, Yokohama-shi, Kanagawa 221-8755 (JP); YAMAMOTO, Hirotsugu, Asahi Glass Company,Ltd., Yokohama-shi, Kanagawa 221-8755 (JP)
(74) Representative: Müller-Boré & Partner Patentanwälte
(86) International application number: PCT/JP2000/008929
(87) International publication number: WO 2001/044371

(56) References cited:
- EP-A2- 0 899 091
- JP-A- 7 252 453
- JP-A- 11 116 815

## Description

### TECHNICAL FIELD

The present invention relates to a composition containing a polysilazane composition and a specific ultraviolet light absorber for preventing coloring particularly at the time of curing, and a coated molded product having a layer excellent in an ultraviolet absorbing property, which is formed from a cured material of the composition.

### BACKGROUND ART

A silica film is used for various uses as a film excellent in heat resistance, abrasion resistance, corrosion resistance and insulating properties. Heretofore, as a method for forming a silica coating film, there have been used CVD method, sol-gel method, PVD method and the like, but recently, a method for coating and curing a precursor polymer of a polysilazane or the like has been developed.

It is a general method to obtain a cured coating film to add an ultraviolet light absorber to a polysilazane in order to impart an ultraviolet light absorbing property to a silica coating film formed from a polysilazane, and JP-A-7-252453 discloses a method for adding an inorganic ultraviolet light absorber such as ZnO or the like as an ultraviolet light absorber.

However, according to the method disclosed in JP-A-7-252453, stability of a composition was insufficient, and there was a problem that transparency of its cured material was unsatisfactory.

On the other hand, when using an organic ultraviolet light absorber as an ultraviolet light absorber, the stability of the composition was satisfactory, and haze of the cured material was not generated, but there was a problem that the cured material was colored yellow when using an ordinary benzophenone type ultraviolet light absorber or benzotriazole type ultraviolet light absorber.

An object of the present invention is to provide a polysilazane'composition which is excellent in an ultraviolet light absorbing property and is less colored at the time of curing, and a coated molded product having its cured material formed on a substrate surface.

### DISCLOSURE OF THE INVENTION

In order to solve the above-mentioned coloring problem, the present inventors have intensively studied, and as a result of the study, it has been discovered that coloring can be avoided by using an ultraviolet light absorber having a specific structure, and the present invention has been accomplished on the basis of this discovery.

Thus, one feature of the present invention resides in a polysilazane composition which comprises a polysilazane and an ultraviolet light absorber having a triazine structure in a molecule. The polysilazane composition preferably further contains a compound having at least one polymerizable functional group. The compound is preferably a polyfunctional compound having at least 2 polymerizable functional groups. Further, the polymerizable functional group is preferably a polymerizable functional group curable by an active energy ray.

According to the present invention, there is provided a polysilazane composition which is excellent in an ultraviolet light-absorbing property and is less colored at the time of curing.

Another feature of the present invention resides in a coated molded product having a substrate and a layer of a cured material of the polysilazane composition, wherein the layer of the cured material of the polysilazane composition is formed on at least one part of the substrate surface.

The layer of the cured material of the polysilazane composition is preferably a layer formed by allowing to stand at room temperature, heating or irradiating with an active energy ray. A layer formed by irradiating with ultraviolet light is particularly preferable since an effect of preventing coloring at the time of curing is large.

According to the present invention, there is provided a coated molded product having a layer of a colorless transparent cured material formed on at least one part of a substrate surface, which is excellent in an ultraviolet light-absorbing property.

### BEST MODE FOR CARRYING OUT THE INVENTION

A polysilazane is a polymer having at least 2 repeating units of (-Si-N-). The remaining two bonds of a silicon atom (tetravalent) or the remaining one bond of a nitrogen atom (trivalent) respectively bond with a hydrogen atom or an organic group (such as an alkyl group).

The polysilazane used in the present invention may be a linear structure comprising the above repeating unit only, or may contain a cyclic structure wherein one or both of the remaining two bonds of a silicon atom is bonded with the remaining bond of a nitrogen atom. ,

A polysilazane is decomposed in the presence of oxygen and a nitrogen atom is substituted with an oxygen atom to form silica, and a cured material of a fully cured polysilazane becomes silica containing substantially no nitrogen atom. Silica formed from a polysilazane becomes a denser silica as compared with silica formed from a hydrolysable silane compound. For example, silica formed from a perhydropolysilazane is denser as compared with silica formed from a tetraalkoxysilane, and is excellent in surface properties such as abrasion resistance.

Accordingly, preferable examples of the polysilazane used in the present invention include a perhydropolysilazane which is a polysilazane containing substantially no organic group, a polysilazane having a hydrolysable group such as an alkoxy group or the like bonded to a silicon atom, a polysilazane having an organic group such as an alkyl group bonded to a silicon atom. Among them, the perhydropolysilazane is particularly preferable because its curing temperature is low and a cured material obtained after curing is dense.

On the other hand, in case of the polysilazane having an organic group such as an alkyl group or a trimethylsilyl group bonded to a silicon atom, silica containing an organic group formed from the polysilazane is poor in respect of surface properties such as abrasion resistance as compared with silica formed from the perhydropolysilazane, but since it provides a tougher cured material and it can provide a thicker cured material layer, it is sometimes more favorably used depending on its use as compared with the perhydropolysilazane.

In the polysilazane having an organic group bonded to a silicon atom, preferable examples of the organic group include a hydrocarbon group or a halogenated hydrocarbon group, and particularly, a hydrocarbon group such as an alkyl group is preferable. A carbon number of these organic groups is not specially limited, but a small carbon number is preferable, and the carbon number is preferably at most 20, more preferably at most 4.

Also, a polysilazane may have a chain-like, cyclic or crosslinking structure as mentioned above, and it may have a plurality of structures in a molecule at the same time. A polysilazane composition may employ one kind of polysilazane alone or a mixture of two or more polysilazanes.

Also, a polysilazane preferably has a number average molecular weight of from 200 to 50,000. If the number average molecular weight is less than 200, a uniform cured material is hardly obtainable, and if the number average molecular weight exceeds 50,000, the polysilazane becomes hardly soluble in a solvent, thus being unpreferable.

The polysilazane composition of the present invention contains a UV light absorber (hereinafter referred to as "UV light absorber (a)") having a triazine structure in a molecule as the essential component.

As mentioned above, when a conventionally used benzophenone type UV light absorber or benzotriazole type UV light absorber is used, coloration is caused when curing a polysilazane, and the degree of coloration is particularly remarkable when curing a polysilazane by irradiating with ultraviolet light. On the other hand, when using the ultraviolet light absorber (a), such coloration is not substantially caused.

The reason for coloration is considered to be due to interaction between a benzophenone type ultraviolet light absorber or benzotriazole type ultraviolet light absorber and a basic material such as ammonia generated at the time of curing the polysilazane. The ultraviolet light absorber (a) used in the present invention hardly interacts with a basic material such as ammonia generated at the time of curing the polysilazane, and therefore such coloration can be prevented. Accordingly, by adding the ultraviolet light absorber (a) to a polysilazane composition, an ultraviolet light-absorbing property can be imparted to a cured material without coloring.

Also, when the ultraviolet light absorber (a) is a polymerizable triazine compound having a polymerizable functional group, the ultraviolet light absorber does not bleed out on the surface of a cured material layer, and adhesiveness to a substrate is excellent.

Preferable examples of the ultraviolet light absorber (a) include a 1,3,5-triazine type compound having an aromatic nucleus-containing substituent such as an aryl group or an alkyl group on the 2, 4 and 6-positions. A particularly preferable example includes a compound wherein at least one of the aromatic nucleus-containing substituents is a hydroxyphenyl group (which may have a substituent other than a hydroxyl group), and when other aromatic nucleus-containing substituents are present, its substituent is a phenyl group (which may have a substituent such as an alkyl group other than a hydroxyl group).

Thus, a compound most preferable as the ultraviolet light absorber (a) is a 1,3,5-triazine compound having two phenyl groups (which may be substituted with an alkyl group) and one hydroxyphenyl group (which may have a substituent other than a hydroxyl group) at the 2,4 and 6-positions.

Also, a preferable example of the polymerizable triazine compound includes a compound having a (meth)acryloyl group as a polymerizable functional group. For example, a reaction product of a compound having a triazine structure and a hydroxyl group as an active hydrogen group and a compound having a (meth)acryloyl group and an isocyanate group is preferable.

Preferable concrete examples of the ultraviolet light absorber (a) are illustrated below:
2-[4-(2-hydroxy-3-dodecyloxypropyloxy)-2-hydroxyphenyl]-4,6-bis(2,4-dimethylphenyl)-1,3,5-triazine, 2-[4-(2-hydroxy-3-tridecyloxypropyloxy)-2-hydroxyphenyl]-4,6-bis(2,4-dimethylphenyl)-1,3,5-triazine, 2-(4-hexyloxy-2-hydroxyphenyl)-4,6-diphenyl-1,3,5-triazine, a reaction product of 1 mol of 2-[4-(2-hydroxy-3-dodecyloxypropyloxy)-2-hydroxyphenyl]-4,6-bis(2,4-dimethylphenyl)-1,3,5-triazine and 1 mol of methacryloyloxyethylisocyanate and a reactive ultraviolet light absorber manufactured by Asahi Denka Kogyo K.K. (type number: "T-672", "T-813").

Also, an amount of the ultraviolet light absorber (a) in the polysilazane composition of the present invention is preferably from 0.01 to 50 mass parts, more preferably from 0.1 to 20 mass parts, per 100 mass parts of polysilazane.

Further, the polysilazane composition of the present invention usually contains a solvent for dissolving a polysilazane in addition to the above basic components. Examples of the solvent include hydrocarbons such as an aliphatic hydrocarbon, a cycloaliphatic hydrocarbon or an aromatic hydrocarbon, halogenated or hydrocarbons, ethers such as an aliphatic ether or a cycloaliphatic ether, Concrete examples include hydrocarbons such as pentane, hexane, isohexane, methylpentane, heptane, isoheptane, octane, isooctane, cyclopentane, methylcyclopentane, cyclohexane, methylcyclohexane, benzene, toluene, xylene or ethylbenzene, halogenated hydrocarbons such as methylene chloride, chloroform, carbon tetrachloride, bromoform, 1,2-dichloroethane, 1,1-dichloroethane, trichloroethane or tetrachloroethane, ethers such as ethyl ether, isopropyl ether or tetrahydropyran.

When using these solvents, plural kinds of solvents may be used in a mixture in order to adjust a solubility of a polysilazane or an evaporation rate of a solvent. Also, an amount of using a solvent varies depending on a structure or an average molecular weight of a polysilazane, but it is preferable to use a solvent so as to provide a solid content concentration in a range of from 0.5 to 80 mass%.

It is usual to carry out heating called as' "calcination" for curing a polysilazane to obtain a silica. In a coated molded product of the present invention, when using a synthetic resin as a substrate, it is difficult to cure a polysilazane by heating at a temperature higher than a heat resistance temperature of the substrate, and therefore the calcination temperature is limited. In such a case, in order to lower the calcination temperature of a polysilazane, it is usual to use a catalyst. Thus, the calcination can be carried out at a lower temperature depending on a kind or an amount of a catalyst used, and it is possible to cure a polysilazane even at room temperature in some cases.

Also, an atmosphere where the calcination is carried out is preferably an atmosphere containing oxygen such as air. By calcining a polysilazane in such an atmosphere, a nitrogen atom is substituted with an oxygen atom to form a silica as mentioned above. Also, by calcining a polysilazane in an atmosphere containing a sufficient amount of oxygen, a denser silica is formed. In addition to this method, as described in JP-A-7-223867, treatment with water or water vapor is also useful for curing at a low temperature.

The above catalyst is preferably a catalyst enabling curing of a polysilazane at a lower temperature, examples of which include a metal catalyst comprising fine particles of a metal such as gold, silver, palladium, platinum, nickel or the like as described in JP-A-7-196986 and a carboxylic acid complex of the above metal catalyst as described in JP-A-5-93275.

Also, as proposed in JP-A-9-31333, it is preferable to employ a method which comprises coating a polysilazane on a substrate and then bringing the coated polysilazane in contact with a catalyst solution such as an amine aqueous solution or exposing the coated polysilazane to the vapor of the amine aqueous solution, without previously adding a catalyst to a polysilazane composition.

When adding a catalyst to a polysilazane composition, an amount of the catalyst added is preferably from 0.01 to 10 mass parts, more preferably from 0.05 to 5 mass parts, to 100 mass parts of a polysilazane. If the amount of the catalyst added is less than 0.01 mass part, a sufficient catalyst effect can not be expected, and if the amount of the catalyst added exceeds 10 mass parts, aggregation of the catalyst tends to occur and transparency is damaged.

Also, JP-A-11-181290 discloses to accelerate curing of a polysilazane by irradiating with an active energy ray in the presence of a photoradical generator. By optimizing the irradiating conditions of the active energy ray or the photoradical generator, it is possible to cure a polysilazane by irradiating with the active energy ray even in the absence of the above catalyst.

Further, when using a synthetic resin as a substrate for a coated molded product or when providing toughness to.a cured material, it is preferable to add a compound having at least one polymerizable functional group (hereinafter referred to as "polymerizable compound") to a polysilazane composition. As the above compound, a polyfunctional compound having at least 2 polymerizable functional groups (hereinafter referred to as "polyfunctional compound (b)") is particularly preferable. Further, as the above polymerizable functional group, a polymerizable functional group curable by an active energy ray is preferable. Thus, as the compound contained in the polysilazane composition, a compound having at least one polymerizable functional group curable by an active energy ray is preferable, and a polyfunctional compound having at least 2 polymerizable functional groups curable by an active energy ray is particularly preferable.

By adding the above compound, adhesiveness to a substrate of synthetic resin is improved, and cracks hardly occur on a layer of a cured material. When providing a certain degree of hardness or scratch resistance to a layer of a cured material, the compound employed is preferably a polyfunctional compound having at least 2 polymerizable functional groups curable by an active energy ray. The term "polyfunctional" in' the polyfunctional compound means to have at least 2 polymerizable functional groups, and the term "monofunctional compound" means a compound having one polymerizable functional group.

The above polyfunctional compound (b) employed may be either one kind of compound or plural kinds of compounds. When employing plural kinds of compounds, they may be a combination of respectively different acryl urethane compounds or may be a combination of an acryl urethane and an acrylic acid ester compound having no urethane bond.

Hereinafter, in the present specification, an acryloyl group and a methacryloyl group are generally referred to as "a (meth)acryloyl group". In the same manner, the terms "a (meth)acryloyloxy group", "a (meth)acrylic acid" or "a (meth)acrylate" are the same expressions. Among these groups or compounds, preferable examples include a compound having an acryloyl group such as an acryloyloxy group, acrylic acid or acrylate.

Examples of the polymerizable functional group curable by an active energy ray include an unsaturated group such as a (meth)acryloyl group, a vinyl group, an allyl group or the like, or a group having such an unsaturated group, preferably a (meth)acryloyl group. That is, as the polyfunctional compound (b), a compound having at least 2 polymerizable functional groups of at least one group selected from a (meth)acryloyl group is preferable. A more preferable example includes a compound having at least 2 (meth)acryloyloxy groups, i.e. a polyester of a (meth)acrylic acid and a' compound having at least 2 hydroxyl groups such as a polyhydric alcohol.

The polyfunctional compound (b) may be a compound having at least two kinds of polymerizable functional groups in one molecule. The number of a polymerizable functional group in one molecule of the polyfunctional compound is at least 2, and the upper limit of this number is not specially limited, but is usually from 2 to 50, preferably from 3 to 30.

In the polysilazane composition of the present invention, at least two kinds of polyfunctional compounds may be contained as the polyfunctional compound (b).

Also, the above polyfunctional compound (b) may be a compound having various functional groups or bonds in addition to a polymerizable functional group. For example, the compound may have a hydroxyl group, a carboxyl group, a halogen atom, a urethane bond, an ether bond, an ester bond, a thioether bond, an amido bond or a diorganosiloxane bond. Particularly preferable examples of the compound include (1) a (meth)acryloyl group-containing compound having a urethane bond (i.e. acryl urethane) and (2) a (meth)acrylic acid ester compound having no urethane bond.
(1) Examples of the (meth)acryloyl group-containing compound having a urethane bond (hereinafter referred to as "acryl urethane") include the following compounds ① to :
   ① A reaction product of a compound (X1) having a (meth)acryloyl group and a hydroxyl group and a compound having at least 2 isocyanate groups (hereinafter referred to as "polyisocyanate"),
   ② A reaction product of the above compound (X1), a compound having at least 2 hydroxyl groups (X2) and a polyisocyanate, and
   ③ A reaction product of a compound having a (meth)acryloyl group and an isocyanate group (X3) and the above compound (X2).

In the above reaction products ① to ③, a hydroxyl group may be present, but an isocyanate group is preferably not present. Accordingly, in the production of these reaction products, a total mol number of a hydroxyl group in all reaction starting materials is preferably equivalent to or larger than a total mol number of an isocyanate group.

Examples of the above compound (X1) include a hydroxyl group, a compound having at least 2 (meth)acryloyl groups and one hydroxyl group, a compound having one (meth)acryloyl group and at least 2 hydroxyl groups, and a compound having at least two each of (meth)acryloyl groups and hydroxyl groups, and more particularly include compounds illustrated in column 0025 of JP-A-11-240103.

Further, the compound (X1) may be a ring-opening reaction product of a compound having at least one epoxy group and a (meth)acrylic acid. The reaction between an epoxy group and a (meth)acrylic acid ring-opens the epoxy group to form an ester bond and a hydroxyl group, and forms a compound having a (meth)acryloyl group and a hydroxyl group. Also, the epoxy group of a compound having at least one epoxy group is ring-opened to form a compound containing a hydroxyl group, which may be converted into a (meth)acrylic acid ester.

A preferable example of the compound having at least one epoxy group includes a polyepoxide called as an epoxy resin. Examples of the polyepoxide include a cycloaliphatic epoxy compound or a compound having at least 2 glycidyl groups of polyhydric phenolspolyglycidyl ether (e.g. bisphenol A-diglycidyl ether). Also, the reaction product of a (meth)acrylate having an epoxy group and a compound having a hydroxyl group or a carboxyl group is usable as the compound (X1). Examples of the (meth)acrylate having an epoxy group include glycidyl (meth)acrylate.

Examples of polyisocyanates in the above reaction products ① or ② include an ordinary monomer-like polyisocyanate or a prepolymer-like compound such as a polymer of polyisocyanate, a modified material of polyisocyanate or an isocyanate group-containing urethane prepolymer.

Examples of the monomer-like polyisocyanate are illustrated in column 0031 of JP-A-11-240103.

On the other hand, examples of the polymer include a trimer (isocyanurate-modified material), a dimer, a carbodiimide-modified material and the like. Examples of the modified materials include a urethane-modified material obtained by modifying with a polyhydric alcohol such as trimethylol propane, a biuret- modified material, an allophanate-modified material and a urea-modified material.

Also, examples of the prepolymer-like compound include an isocyanate group-containing urethane prepolymer obtained by reacting a polyisocyanate and a polyol such as the following polyether polyol or polyester polyol and the like. These polyisocyanates may be used in a combination of two or more.

In the present invention, a preferable example of the polyisocyanate includes a polyisocyanate not colored yellow (a polyisocyanate having no isocyanate group directly bonded to an aromatic nucleus). More particular examples are illustrated in column 0032 of JP-A-11-240103.

Examples of the above compound (X2) include a polyhydric alcohol or a higher molecular polyol as compared with a polyhydric alcohol.

Examples of the polyhydric alcohol include preferably a polyhydric alcohol having 2 to 20 hydroxyl groups, and particularly a polyhydric alcohol having 2 to 15 hydroxyl groups. Concrete examples of the polyhydric alcohol include an aliphatic polyhydric alcohol, and a cycloaliphatic polyhydric alcohol or a polyhydric alcohol having an aromatic nucleus.

Examples of the polyhydric alcohol having an aromatic nucleus include an alkylene oxide adduct of polyhydric phenols and a polyepoxide ring-opened material having an aromatic nucleus such as polyphenolspolyglycidyl ether.

Examples of the above polyhydric alcohol are illustrated in column 0035 of JP-A-11-240103.

Examples of the polyols having a high molecular amount include polyether polyol, polyester polyol, polyether ester polyol, polycarbonate polyol, and the like. Also, a hydroxyl group-containing vinyl polymer is usable as the polyol. These polyhydric alcohols or polyols can be used in a combination of two or more.

Examples of the above polyols or hydroxyl group-containing vinyl polymers include compounds illustrated in columns 0036 to 0037 of JP-A-11-240103.

Also, examples of the above compound (X3) include 2-isocyanateethyl(meth)acrylate and methacryl isocyanate.
(2) Examples of the (meth)acrylic acid ester compound having no urethane bond include a polyester of (meth)acrylic acid and a compound having at least 2 hydroxyl groups in the same manner as in the above compound (X2). A preferable example of the compound having at least 2 hydroxyl groups includes the above-mentioned polyhydric alcohols or polyols. Further, a preferable example includes a (meth)acrylic acid ester compound which is a reaction product of a (meth)acrylic acid and a compound having at least 2 epoxy groups.

Thus, more particular examples of a polyfunctional compound containing no urethane bond include ① a (meth)acrylate of an aliphatic polyhydric alcohol illustrated in column 0039 of JP-A-11-240103, ② a (meth)acrylate of a polyhydric phenol or a polyhydric alcohol having a triazine ring or an aromatic nucleus illustrated in column 0040 of JP-A-11-240103, and ③ a (meth)acrylate of a hydroxyl group-containing compound-alkylene oxide adduct, a (meth)acrylate of a hydroxyl group-containing compound-caprolactone adduct, and a (meth)acrylate of a polyoxyalkylene polyol illustrated in column 0041 of JP-A-11-240103.

In the present invention, in order to impart a sufficient abrasion resistance to a cured material of a polysilazane composition, it is preferable that at least a part, preferably at least 30 mass%, more preferably at least 50 mass% of a polymerizable compound is a polyfunctional compound having at least 3 polymerizable functional groups curable by an active energy ray.

Thus, more particular examples of a polyfunctional compound (b) include the following acryl urethanes and polyfunctional compounds having no urethane bond.

Preferable examples of the acryl urethane include the following compounds 1) or 2): 1) an acryl urethane compound having at least 3 polymerizable functional groups (preferably from 4 to 20) curable by an active energy ray, i.e. a reaction product of a hydroxyalkyl (meth)acrylate, a polyisocyanate and a polypentaerythritol such as pentaerythritol or its polymer, and 2) an acryl urethane compound having at least 3 polymerizable functional groups (preferably form 4 to 20) curable by an active energy ray, i.e. a reaction product of a polyisocyanate, a hydroxyl group-containing poly(meth)acrylate and pentaerythritol or polypentaerythritol.

Examples of the polyfunctional compound having no urethane bond include preferably a pentaerythritol type poly(meth)acrylate or an isocyanurate type poly(meth)acrylate. Examples of the pentaerythritol type poly(meth)acrylate include a polyester (preferably having 4 to 20 polymerizable functional groups curable by an active energy ray) of (meth)acrylic acid and pentaerythritol or polypentaerythritol. Further, examples of the isocyanurate type poly(meth)acrylate include a polyester (preferably having 2 to 3 polymerizable functional groups curable by an active energy ray) of (meth)acrylic acid and an adduct obtained by adding 1 to 6 mols of caprolactone or alkylene oxide to 1 mol of tris(hydroxyalkyl)isocyanurate. It is preferable to use these preferable polyfunctional compounds and other polyfunctional compounds (particularly poly(meth)acrylate of polyhydric alcohol) having at least 2 polymerizable functional groups curable by an active energy ray in combination. These preferable polyfunctional compounds are used preferably in an amount of at least 30 mass%, more preferably at least 50 mass%, to the total polyfunctional compounds (b).

Also, in addition to the above polyfunctional compound (b), a monofunctional compound having one polymerizable functional group may be contained. It is preferable to use a monofunctional compound having one polymerizable functional group (polymerizable with an active energy ray) curable by an active energy ray as the monofunctional compound. A preferable example of the monofunctional compound includes a compound having a (meth)acryloyl group, preferably an acryloyl group.

In the polysilazane composition of the present invention, when using the above monofunctional compound, the ratio of the monofunctional compound to the total amount' of the polyfunctional compound (b) and the monofunctional compound, is not specially limited, but is preferably at most 60 mass%, more preferably at most 30 mass%. If the ratio of the monofunctional compound exceeds 60 mass%, hardness of a cured material is unpreferably lowered, and abrasion resistance becomes unsatisfactory.

A preferable example of the above monofunctional compound includes a compound having one (meth)acryloyl group in a molecule, which may have a functional group such as a hydroxyl group, an epoxy group or the like. A more preferable example of the monofunctional compound includes a (meth)acrylic acid ester, i.e. a (meth)acrylate. Concrete examples of the monofunctional compound include compounds illustrated in column 0049 of JP-A-11-240103.

In the present invention, when a polysilazane composition contains a polymerizable compound such as a polyfunctional compound (b), it is preferable to contain a photopolymerization initiator in order to cure the polymerizable compound. Also, even when the polysilazane composition does not contain a polymerizable compound, curing of the polysilazane is accelerated by adding a photopolymerization initiator and by irradiating with ultraviolet light.

A well-known photopolymerization initiator is usable as a photopolymerization initiator, preferable examples of which include commercially easily available compounds. Also, a plurality of photopolymerization initiators may be used.

Examples of the above photopolymerization initiator include an aryl ketone type photopolymerization initiator (such as acetophenones, benzophenones, alkylaminobenzophenones, benzyls, benzoins, benzoin ethers, benzyldimethylketals, benzoyl benzoates or α-acyloxy esters), a sulfur-containing type photopolymerization initiator (such as sulfides or thioxanthones), an acylphosphine oxide type photopolymerization initiator, a diacylphosphine oxide type photopolymerization initiator, and other photopolymerization initiators. Also, a photopolymerization initiator may be used in combination with a photosensitizer such as amines. Examples are illustrated in columns No. 0081 to No. 0085 of JP-A-11-240103.

A particularly preferable example of a photopolymerization initiator includes 2-methyl-1-[4-(methylthio)phenyl]-2-morpholinopropane-1-one, 2,4,6-trimethylbenzoyldiphenylphosphine oxide, benzoyldiphenylphosphine oxide, 2,6-dimethylbenzoyldiphenylphosphine oxide, bis(2,6-dimethoxybenzoyl)-2,4,4-trimethylpentylphosphine oxide, bis(2,4,6-trimethylbenzoyl)phenylphosphine oxide, ethyl 2,4,6-trimethylbenzoylphenylphosphinate, methyl 2,4,6-trimethylbenzoylphenylphosphinate, isopropyl 2,4,6-trimethylbenzoylphenylphosphinate, dimethyl 2,4,6-trimethylbenzoylphosphonate and diethyl 2,4,6-trimethylbenzoylphosphonate.

The amount of a photopolymerization initiator in the polysilazane composition of the present invention is preferably from 0.01 to 20 mass parts, more preferably from 0.1 to 10 mass parts, to 100 mass parts of a polymerizable compound.

Further, the polysilazane composition of the present invention may contain functional additives, if necessary. Examples of the functional additives include at least one kind of functional additives selected from an inorganic ultraviolet light absorber, a photostabilizer, an antioxidant, a heat polymerization inhibitor, a leveling agent, a defoaming agent, a thickening agent, an antisettling agent, a pigment, a coloring dye, an infrared light absorber, a fluorescent lightening agent, a dispersing agent, an antifouling agent, a rust preventive, electroconductive fine particles, an antistatic agent, surfactants such as an anti-fogging agent, and a curing catalyst.

A preferable example of the light stabilizer includes a hindered amine type light stabilizer usually used as a light stabilizer for a synthetic resin. Examples of the hindered amine type light stabilizer include compounds illustrated in column No. 0094 of JP-A-11-240103 and the following compounds.

N-(2,2,6,6-tetramethyl-4-piperidyl)dodecylsuccinic acid imide, 1-[(3,5-di-t-butyl-4-hydroxyphenyl)propionyloxyethyl]-2,2,6,6-tetramethyl-4-piperidyl(3,5-di-t-butyl-4-hydroxyphenyl)propionate, N,N'-bis(2,2,6,6-tetramethyl-4-piperidyl)hexamethylenediamine, tetrakis(1,2,2,6,6-pentamethyl-4-piperidyl)butanetetracarboxylate, bis(2,2,6,6-tetramethyl-4-piperidyl)di(tridecyl)butanetetracarboxylate, bis(1,2,2,6,6-pentamethyl-4-piperidyl)di(tridecyl)butanetetracarboxylate, 3,9-bis[1,1-dimethyl-2-{tris(2,2,6,6-tetramethyl-4-piperidyloxycarbonyl)butylcarbonyloxy}ethyl]-2,4,8,10-tetraoxaspiro[5.5]undecane, 3,9-bis[1,1-dimethyl-2-(tris(1,2,2,6,6-pentamethyl-4-piperidyloxycarbonyl)butylcarbonyloxy}ethyl)-2,4,8,10-tetraoxaspiro[5.5]undecane, 1,5,8,12-tetrakis[4,6-bis(N-(2,2,6,6-tetramethyl-4-piperidyl)butylamino}-1',3,5-triazine-2-yl]-1,5,8,12-tetraazadodecane, 1-(2-hydroxyethyl)-2,2,6,6-tetramethyl-4-piperidinol/succinic acid dimethyl condensate, 2-t-octylamino-4,6-dichloro-s-triazine/N,N'-bis(2,2,6,6-tetramethyl-4-piperidyl)hexamethylenediamine condensate, N,N'-bis(2,2,6,6-tetramethyl-4-piperidyl)hexamethylenediamine/dibromoethane condensate.

Examples of the antioxidant include a hindered phenol type antioxidant such as 2,6-di-t-butyl-p-cresol and a phosphorus type antioxidant such as triphenylphosphite. Examples of the leveling agent include a silicone resin type leveling agent and an acryl resin type leveling agent.

Examples of the defoaming agent include a silicone resin type defoaming agent such as polydimethylsiloxane. Examples of the thickening agent include a polymethylmethacrylate type polymer, a hydrogenated castor oil type compound and an aliphatic acid amide type compound.

Examples of the pigment include organic coloring pigments such as a condensed polycyclic organic pigment or a phthalocyanine type organic pigment, and inorganic pigments such as titanium dioxide, cobalt oxide, molybdate red or titan black. Examples of the coloring dye include an organic solvent-soluble azo type metal complex dye and an organic solvent-soluble phthalocyanine type dye.

Examples of the infrared light absorber include polymethyne type, phthalocyanine type, metal complex type, aluminum type, diimonium type, anthraquinone type, dithiol metal complex type, naphthoquinone type, indolphenol type, azo type or triaryl methane type compounds. Examples of the fluorescent brightening agent include a coumarin type fluorescent brightening agent, an oxazole type fluorescent brightening agent such as 2,5-bis(5'-t-butylbenzooxazolyl-(2'))thiophenone.

Examples of the antifouling agent include a silicone resin type antifouling agent and a fluororesin type antifouling agent. Examples of the rust preventive include silica, polyphosphoric acid, phosphate, molybdate, phosphomolybdate, phytic acid, phytic acid salt, phosphoric acid and phosphonate. Examples of the electroconductive fine particles include metal powders such as zinc, aluminum, nickel or the like, iron phosphate and antimony-doped tin oxide.

Examples of the antistatic agent include a nonionic antistatic agent, a cationic antistatic agent, an anionic antistatic agent, and the like. Examples of the anti-fogging agent include a nonionic surfactant.

The polysilazane composition of the present invention may be formed into a mold product by curing the composition alone, but is usually coated on at least a part of a substrate surface and is cured to form a coated molded product.

In the present invention, a thickness of a cured material layer of the polysilazane composition varies depending on an amount of a polymerizable compound added, but is preferably from 0.1 to 100 µm, more preferably from 1 to 50 µm. The thickness obtained is the same as in the case of coating the polysilazane composition on a substrate surface to obtain a coated molded product. On the other hand, when the polymerizable compound is not contained, the thickness of the cured material of the polysilazane composition is preferably from 0.1 to 10 µm, more preferably from 0.1 to 3 µm. If the thickness of the cured material layer is smaller than the above-mentioned range, a satisfactory ultraviolet light absorbing property can not be obtained, and if the thickness of the cured material layer exceeds the above range, the cured material layer tends to cause unpreferable cracks.

A substrate used in the present invention is not specially limited, and any of glass, synthetic resin, ceramics, metals and the like can be used. Examples of the synthetic resin include an aromatic polycarbonate type resin, a polymethylmethacrylate type resin (acryl resin), a polystyrene type resin and a polyester type resin.

The coated molded product of the present invention can be formed into a molded product subjected to bending depending on its use. When forming a molded product subjected to bending, it is preferable to form a layer of uncured material or partly cured material of the polysilazane composition on the surface of a substrate and subjecting the resultant product to bending. Also, a premolded substrate may be used, and for'example, it is possible to use a sheet-like substrate such as a flat plate, a corrugated plate, a film-like substrate, and other variously shaped substrates.

Means of coating the polysilazane composition of the present invention are not specially limited, but well-known methods can be employed, examples of which include dipping method, flow coating method, spray coating method, bar coating method, gravure coating method, roll coating method, blade coating method, air knife coating method, spin coating method, slit coating method and microgravure coating method.

In the present invention, a substrate may be , subjected to various surface treatments such as filing, degreasing, plasma treatment before coating, and a substrate surface may also be subjected to primer coating with a silane coupling agent before coating. By applying such a pretreatment, adhesion between a substrate and a cured material layer of the polysilazane composition can be highly improved.

When the polysilazane composition contains a solvent, the solvent may be removed by drying after coating, and the coated composition is then cured by irradiating with an active energy ray such as ultraviolet light, heating or allowing to stand at room temperature. Also, curing can be accelerated by making in contact with vapor or an aqueous solution of amines or acids.

An active energy ray used for curing the polysilazane composition of the present invention is not specially limited, and ultraviolet light, electron radiation or other active energy rays are usable, but ultraviolet light is preferable. Examples of an ultraviolet light source include a xenon lamp, a pulse xenon lamp, a low pressure mercury lamp, a high pressure mercury lamp, an ultra high pressure mercury lamp, a metal halide lamp, a carbon arc lamp and a tungsten lamp.

According to the present invention, a polysilazane composition capable of forming a colorless cured material excellent in ultraviolet light absorbing properties can be provided. Also, a coated molded product having a transparent cured material layer excellent in ultraviolet light absorbing properties on at least a part of a substrate surface can be provided. Particularly, it is characterized in that a colorless cured material layer can be formed by irradiating with an active energy ray (particularly ultraviolet light).

### EXAMPLES

Hereinafter, the present invention is further illustrated with reference to Exampels, but should not be limited thereto. In the following Examples, a quartz glass, a transparent aromatic polycarbonate resin plate (thickness 3 mm, 150 mm × 300 mm) or a stainless plate (SUS304) was employed as a substrate.

Each sample obtained in Exampels 1 to 5, and 7 to 11 was measured and evaluated with regard to various physical properties in accordance with the following methods. The results are shown in the following Table 1.

### [Initial haze value]

A haze value of a sample was measured by using a haze meter.

### [Initial yellow color degree]

A yellow color degree value (YI) was measured at two points of a sample by a color meter (manufactured by Suga Shikenki K.K.), and their average value was shown.

### [Ultraviolet light transmittance]

Absorption spectrum was measured by a spectrophotometer to measure an ultraviolet light transmittance (%) at 300 nm.

### [Bleed out resistance]

A sample was allowed to stand for 30 days under constant temperature and constant moisture conditions of 60°C and relative humidity 95%, and a surface of a cured material layer was observed to check the presence or absence of "bleed out". A sample in which "bleed out" was not observed at all was marked to be ○, a sample in which "bleed out" was slightly observed was marked to be Δ, and a sample in which "bleed out" was clearly observed was marked to be ×.

### EXAMPLE 1

0.2g of 2-[4-(2-hydroxy-3-dodecyloxypropyloxy)-2-hydroxyphenyl]-4,6-bis(2,4-dimethylphenyl)-1,3,5-triazine was added to 10g of a xylene solution of a low temperature-curable perhydropolysilazane (solid content: 20 mass%, trade name "L110" manufactured by Tonen K.K.), and was completely dissolved to obtain a coating solution 1.

The above coating solution 1 was coated in a wet thickness of 10 µm on a quartz glass plate by spin coating method, and was maintained for 1 hour at 120°C in a hot air-circulating oven. The resultant sample was maintained for 3 hours under an atmosphere of 95°C and relative humidity 80% to obtain a sample having a cured material layer of layer thickness 2 µm formed on the surface of quartz glass. The sample thus obtained was subjected to IR (infrared light absorption spectrum) analysis, and it was confirmed that the cured material layer of the sample was complete silica.

### EXAMPLE 2

The sample preparation process of Example 1 was modified as indicated below. That is, a sample was prepared in the same manner as in Example 1, except that a xylene solution of perhydropolysilazane containing no catalyst (solid content 20 mass%, trade name "V110" manufactured by Tonen K.K.) was used in place of perhydropolysilazane "L110" in the coating solution 1, and that the sample was maintained for 3 minutes on a 3% triethylamine aqueous solution bath at 25°C in place of being maintained for 3 hours under an atmosphere of 95°C and relative humidity 80%.

### EXAMPLE 3

0.2g of 2-[4-(2-hydroxy-3-dodecyloxypropyloxy)-2-hydroxyphenyl]-4,6-bis(2,4-dimethylphenyl)-1,3,5-triazine was added to 10g of a xylene solution of polysilazane having a part of hydrogen atoms bonded to a silicon atom substituted with a methyl group (solid content 20 mass%, trade name "NL710" manufactured by Tonen K.K.), and was completely dissolved to obtain a coating solution 2.

The above coating solution 2 was coated on a quartz glass plate by spin coating method, and was maintained for 1 hour at 120°C in a hot air-circulating oven. The resultant sample was maintained for 3 hours under an atmosphere of 95°C and relative humidity 80% to obtain a sample having a cured material layer of layer thickness 2 µm formed on the quartz glass surface. This sample was subjected to IR analysis, and it was confirmed that the cured material layer was complete silica.

### EXAMPLE 4

54g of xylene, 36g of dibutyl ether, 2.0g of 2-[4-(2-hydroxy-3-dodecyloxypropyloxy)-2-hydroxyphenyl]-4,6-bis(2,4-dimethylphenyl)-1,3,5-triazine and 0.4g of 2-methyl-1-{4-(methylthio)phenyl)-2-morpholinopropane-1-one were dissolved in a four-forked flask equipped with a stirrer and a cooling tube, and 20g of tris(2-acryloyloxyethyl)isocyanurate and 100g of perhydropolysilazane "V110" were added thereto, and the resultant mixture was stirred in a nitrogen atmosphere at room temperature for 1 hour to obtain a coating solution 3.

The above coating solution 3 was coated (25 µm) on an aromatic polycarbonate resin plate by a bar coater, and was maintained for 5 minutes at 80°C in a hot air-circulating oven. The coated sample was irradiated with ultraviolet light by means of a high pressure mercury lamp of 3,000 mJ/cm² (accumulated energy amount of ultraviolet light of 300 to 390 nm wavelength, hereinafter the same) in an air atmosphere to obtain a sample having a cured material layer of layer thickness 5 µm formed on the surface of the aromatic polycarbonate resin plate.

### EXAMPLE 5

0.2g of 2-[4-(2-hydroxy-3-dodecyloxypropyloxy)-2-hydroxyphenyl]-4,6-bis(2,4-dimethylphenyl)-1,3,5-triazine and 0.04g of 2-methyl-1-{4-(methylthio)phenyl}-2-morpholinopropane-1-one were added to 10g of perhydropolysilazane "V110", and were completely dissolved to obtain a coating solution 4.

The above coating solution 4 was coated (10 µm) on a quartz glass plate by spin coating method, and was maintained for 1 hour at 120°C in a hot air-circulating oven. The coated sample was irradiated with ultraviolet light by means of a high pressure mercury lamp of 3,000 mJ/cm² in an air atmosphere to obtain a sample having a cured material layer of layer thickness 2 µm formed on the quartz glass surface. The sample thus obtained was subjected to IR analysis, and it was confirmed that the cured material layer of this sample was complete silica.

### EXAMPLE 6

The coating solution 1 was coated on a stainless plate by spin coating method, and was maintained for 1 hour at 120°C in a hot air-circulating oven. The coated sample thus obtained was maintained for 3 hours under an atmosphere of 95°C and relative humidity 80% to obtain a sample having a cured material layer of layer thickness 1 µm formed on the stainless plate surface. The sample was then subjected to IR analysis, and it was confirmed that the cured material layer was complete silica. The cured material layer of this sample was colorless and transparent.

### EXAMPLE 7

54g of xylene, 36g of dibutyl ether, 2.0g of a reaction product of 1 mol of 2-[4-(2-hydroxy-3-dodecyloxypropyloxy)-2-hydroxyphenyl]-4,6-bis(2,4-dimethylphenyl)-1,3,5-triazine and 1 mol of methacryloyl oxyethyl isocyanate, and 0.4g of 2-methyl-1-{4-(methylthio)phenyl}-2-morpholinopropane-1-one were dissolved in a four-forked flask equipped with a stirrer and a cooling tube. 20g of tris(2-acryloyloxyethyl)isocyanurate and 100g of perhydropolysilazane "V110" were then added thereto, and the resultant mixture was stirred at room temperature for 1 hour under a nitrogen atmosphere to obtain a coating solution 5.

The coating solution 5 thus obtained was coated (25 µm) on an aromatic polycarbonate resin plate by means of a bar coater, and was maintained for 5 minutes at 80 °C in a hot air-circulating oven. The coated sample was then irradiated with ultraviolet light by means of a high pressure mercury lamp of 3,000 mJ/cm2 in an air atmosphere to obtain a sample having a cured material layer of layer thickness 5 µm formed on the aromatic polycarbonate resin plate surface.

### EXAMPLE 8

0.2g of a reactive ultraviolet light-absorber (type number "T-672") and 0.04g of 2-methyl-1-{4-(methylthio)phenyl}-2-morpholinopropan-1-one were added to 10g of perhydropolysilazane "V110", and were completely dissolved to obtain a coating solution 6.

The above coating solution 6 was coated (10 µm) on a quartz glass plate by spin coating method, and was maintained for 1 hour at 120°C in a hot air-circulating oven. The coated sample was irradiated with ultraviolet light by means of a high pressure mercury lamp of 3,000 mJ/cm² in an air atmosphere to obtain a sample having a cured material layer of layer thickness 2 µm formed on the quartz glass surface. The sample thus obtained was subjected to IR analysis, and it was confirmed that the cured material layer of this sample was complete silica.

### EXAMPLE 9

The sample preparation process of Example 1 was modified as indicated below. That is, a sample was prepared in the same manner as in Example 1, except that 2-(3,5-di-t-amyl-2-hydroxyphenyl)benzotriazole was used in place of 2-[4-(2-hydroxy-3-dodecyloxypropyloxy)-2-hydroxyphenyl]-4,6-bis(2,4-dimethylphenyl)-1,3,5-triazine in the coating solution 1.

### EXAMPLE 10

The sample preparation process of Example 4 was modified as indicated below. That is, a sample was prepared in the same manner as in Example 4, except that 2-{2-hydroxy-5-(2-acryloyloxyethyl)phenyl}benzotriazole was used in place of 2-[4-(2-hydroxy-3-dodecyloxypropyloxy)-2-hydroxyphenyl]-4,6-bis(2,4-dimethylphenyl)-1,3,5-triazine in the coating solution 3.

### EXAMPLE 11

The sample preparation process of Example 5 was modified as indicated below. That is, a sample was prepared in the same manner as in Example 5, except that 2-{2-hydroxy-5-(2-acryloyloxyethyl)phenyl}benzotriazole was used in place of 2-[4-(2-hydroxy-3-dodecyloxypropyloxy)-2-hydroxyphenyl]-4,6-bis(2,4-dimethylphenyl)-1,3,5-triazine in the coating solution 4.

**Table 1**

| | Initial haze value (%) | Initial yellow degree | UV ray transmittance (%) | Bleed out resistance |
|---|---|---|---|---|
| Example 1 | 0.4 | 0.5 | 8 | Δ |
| Example 2 | 0.3 | 0.3 | 8 | Δ |
| Example 3 | 0.5 | 0.6 | 8 | Δ |
| Example 4 | 0.5 | 0.4 | 5 | × |
| Example 5 | 0.3 | 0.5 | 8 | Δ |
| Example 7 | 0.4 | 0.8 | 6 | ○ |
| Example 8 | 0.3 | 0.7 | 4 | ○ |
| Example 9 | 0.7 | 3.5 | 12 | Δ |
| Example 10 | 0.6 | 12.3 | 7 | × |
| Example 11 | 0.5 | 9.0 | 12 | Δ |

Cured material layer (Examples 1 to 8) obtained by using a polysilazane composition containing an ultraviolet light absorber having a triazine structure in a molecule are substantially colorless and their yellow color degrees are very low as compared with cured material layers (Examples 9 to 11) obtained by using a polysilazane composition containing a benzotriazole type ultraviolet light absorber.

Also, cured material layers (Example 7 and Example 8) obtained by using a polysilazane composition containing a polymerizable triazine compound is excellent in bleed out resistance.

## Claims

1. A polysilazane composition comprising a polysilazane and an ultraviolet light absorber having a triazine structure in a molecule.

2. The polysilazane composition according to Claim 1, wherein the polysilazane composition further contains a compound having at least one polymerizable functional group.

3. The polysilazane composition according to Claim 2, wherein the compound is a polyfunctional compound having at least 2 polymerizable functional groups.

4. The polysilazane composition according to Claim 2 or 3, wherein the polymerizable functional group is a polymerizable functional group curable by an active energy ray.

5. The polysilazane composition according to Claim 1, 2, 3 or 4, wherein the ultraviolet light absorber is a polymerizable triazine compound.

6. A coated molded product having a layer of a cured material of the polysilazane composition as defined in Claim 1, 2, 3, 4 or 5, which comprises a substrate and a layer of a cured material of the polysilazane composition formed on at least one part of the substrate surface.

7. The coated molded product according to Claim 6, wherein the layer of the cured material of the polysilazane composition is a layer formed by allowing the polysilazane composition to stand at room temperature, heating or irradiating with an active energy ray.

8. The coated molded product according to Claim 6, wherein the layer of the cured material of the polysilazane composition is a layer formed by irradiating with ultraviolet light.

## Patentansprüche

1. Polysilazanzusammensetzung, umfassend ein Polysilazan und einen UV-Licht-Absorber mit einer Triazinstruktur in einem Molekül.

2. Polysilazanzusammensetzung nach Anspruch 1, wobei die Polysilazanzusammensetzung weiter eine Verbindung mit mindestens einer polymerisierbaren funktionalen Gruppe enthält.

3. Polysilazanzusammensetzung nach Anspruch 2, wobei die Verbindung eine polyfunktionale Verbindung mit mindestens zwei polymerisierbaren funktionalen Gruppen ist.

4. Polysilazanzusammensetzung nach Anspruch 2 oder 3, wobei die polymerisierbare funktionale Gruppe eine polymerisierbare funktionale Gruppe ist, die durch eine Bestrahlung mit aktiver Energie härtbar ist.

5. Polysilazanzusammensetzung nach Anspruch 1, 2, 3 oder 4, wobei der UV-Licht-Absorber eine polymerisierbare Triazinverbindung ist.

6. Beschichtetes Formprodukt mit einer Schicht eines gehärteten Materials der Polysilazanzusammensetzung, wie in Anspruch 1, 2, 3, 4 oder 5 definiert, welches ein Substrat und eine Schicht eines gehärteten Materials der Polysilazanzusammensetzung, gebildet auf mindestens einem Teil der Substratoberfläche, umfaßt.

7. Beschichtetes Formprodukt nach Anspruch 6, wobei die Schicht des gehärteten Materials der Polysilazanzusammensetzung eine Schicht ist, die durch Stehenlassen der Polysilazanzusammensetzung bei Raumtemperatur, Erwärmen oder Bestrahlen mit einer Strahlung aktiver Energie gebildet worden ist.

8. Beschichtetes Formprodukt nach Anspruch 6, wobei die Schicht des gehärteten Materials der Polysilazanzusammensetzung eine Schicht ist, die durch Bestrahlen mit UV-Licht gebildet worden ist.

## Revendications

1. Composition de polysilazane comprenant un polysilazane et un absorbeur de lumière ultraviolette ayant une structure triazine dans une molécule.

2. Composition de polysilazane selon la revendication 1, laquelle contient en outre un composé ayant au moins un groupe fonctionnel polymérisable.

3. Composition de polysilazane selon la revendication 2, dans laquelle le composé est un composé polyfonctionnel ayant au moins 2 groupes fonctionnels polymérisables.

4. Composition de polysilazane selon la revendication 2 ou 3, dans laquelle le groupe fonctionnel polymérisable est un groupe fonctionnel polymérisable durcissable par un rayon énergétique actif.

5. Composition de polysilazane selon la revendication 1, 2, 3 ou 4, dans laquelle l'absorbeur de lumière ultraviolette est un composé triazine polymérisable.

6. Produit moulé pourvu d'un revêtement, ayant une couche de matière durcie de la composition de polysilazane selon la revendication 1, 2, 3, 4 ou 5, qui comprend un substrat et une couche d'une matière résultant du durcissement de la composition de polysilazane, formée sur au moins une partie de la surface du substrat.

7. Produit moulé pourvu d'un revêtement selon la revendication 6, dans lequel la couche de la matière résultant du durcissement de la composition de polysilazane est une couche formée en laissant la composition de polysilazane reposer à température ambiante, en la chauffant ou en l'irradiant avec un rayon énergétique actif.

8. Produit moulé pourvu d'un revêtement selon la revendication 6, dans lequel la couche de la matière résultant du durcissement de la composition de polysilazane est une couche formée par irradiation avec de la lumière ultraviolette.
